# EUROPEAN PATENT SPECIFICATION

(11) **EP 2 980 401 B1**
(45) Date of publication and mention of the grant of the patent: **21.02.2018**
(21) Application number: 14382290.6
(22) Date of filing: 29.07.2014
(51) Int. Cl.: F03D 80/70, F03D 7/02

(54) **Pitch drive system with lubrication arrangement**
Blattwinkelantriebssystem mit Schmieranordnung
Système de pitch avec un agencement de lubrification

(43) Date of publication of application: 03.02.2016
(73) Proprietor: ALSTOM Renewable Technologies, 38041 Grenoble - Cedex 9 (FR)
(72) Inventor: Garcia Cervilla, Javier, 08029 Barcelona (ES)
(74) Representative: ZBM Patents - Zea, Barlocci & Markvardsen

(56) References cited:
- WO-A1-2008/074320
- DE-A1-102010 040 417
- DE-A1-102012 101 593
- DE-B3- 10 321 535
- FR-A- 1 541 597
- US-A1- 2007 081 896

## Description

The present disclosure relates to pitch drive systems for wind turbine rotors, and more particularly relates to wind turbine rotors comprising at least one electromechanical pitch mechanism. Wind turbines comprising such rotors are also described.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

The loads on the rotor may be controlled by pitching the blades, i.e. by rotating each blade around its longitudinal axis (from root to tip). Lift and drag can thus be changed to influence the aerodynamic torque on the rotor. This way, even though the wind speed may increase, the torque transmitted by the rotor to the generator can remain substantially the same.

For the purposes of pitching the blades, each blade may be mounted on the hub employing a pitch system. In many known turbines, such a pitch system may comprise a pitch bearing arranged between the hub and the blade and a pitch drive which may include a hydraulic or electric motor. The motor, through the use of a reduction gearing (sometimes referred to as a "reductor", or as a "reduction gear") can drive an actuating gear. The actuating gear (pinion) may generally be arranged to mesh with an annular gear provided on the wind turbine blade to set the blade into rotation and change its pitch angle. It is also possible however, to provide the annular gear on the hub, whereas the motor and the actuating gear may be mounted on the blade.

It is further known to provide an individual pitch system (comprising a separate motor and a separate control) for each individual wind turbine blade of a rotor. Also, it is known to provide a common pitch system wherein the pitch angle of the blades is the same for all blades on a rotor. Such a common pitch system may comprise a single motor or may comprise a plurality of motors, one for each blade.

A control strategy of a pitch system that is often employed in variable speed wind turbines is to maintain the blade in a predefined "below rated pitch position", i.e. a default pitch position, at wind speeds equal to or below nominal wind speed (for example, approximately 4 m/s - 12 m/s). Said default pitch position may generally be close to a 0° pitch angle. The exact pitch angle in or below nominal wind speed conditions depends however on the complete design of the wind turbine. Above the nominal wind speed (for example from approximately 12 m/s - 25 m/s), the blades can be rotated to maintain the aerodynamic torque delivered by the rotor substantially constant. When the wind turbine is not operating, the blades may assume a vane position (e.g. at or around 90° pitch angle) to minimize the loads on the blades. During most of the wind turbine's life, a blade may however be in the same pitch position which is the default position at wind speeds equal to or below nominal wind speed. The nominal wind speed, cut-in wind speed and cut-out wind speed may of course vary depending on the wind turbine design.

During operation of the wind turbine, forces may be acting on the blades that result in a constantly varying torque around the blade's longitudinal axis. These forces may include the aerodynamic torque around the longitudinal axis of the blade. Furthermore, since the blade's centre of mass is usually not located exactly on its rotating axis, the weight of the blade may exercise an additional torque around the blade's longitudinal axis. Both these forces are non-constant, largely cyclical and tend to rotate the blade out of the position determined by the pitch control system.

When pitch systems involving gearing are used, the varying torque may result in flanks of the teeth of the actuating gear (pinion) and the annular gear repeatedly touching each other. Such repetitive contact between teeth may remove thin metallic particles, and may create a tooth print in the contacting flanks of the annular gear and the pinion. This repetitive contact may thus lead to fretting corrosion and premature wear. Since the pitch position at or below nominal wind speed i.e. the below rated pitch position is the prevailing position for most of the time for most wind turbines, the contact between the teeth and its consequences is usually concentrated on the same teeth.

It is known to provide, for example, a rotor blade adjuster device and guide means for displacing the rotor blade adjuster device between two positions in which cooperation between the pinion and the crown gear is possible. With such systems an alternate meshing position is provided, but these systems do not attempt to reduce the fretting corrosion as such.

It is also known to provide lubricating devices in order to at least in part prevent fretting corrosion. For example, document US7244097 provides a lubricating device configured such that, due to a temporary displacement of the driving toothed wheel from an operating position into a lubricating position, the lubricating device can be engaged with a defined point of the gearing or the driving toothed wheel, so as to transfer lubricant. However such designs are quite cumbersome, costly and furthermore lubrication cannot be constantly provided.

Document DE102012101593 describes an arrangement for lubricating gear transmission of a wind turbine which comprises a lubrication hose assembly which is arranged on one of the gear elements.

Further known systems provide passages drilled in the drive pinion or the slewing ring which may weaken the drive pinion or the slewing ring in which they are drilled. Other known systems provide lubricant spray nozzles oriented towards the area on which the lubricant is desired. However, in such systems the lubricant can be spread more than desirable thus contaminating the area around the pitch system.

There still exists a need for wind turbine pitch drive systems that can reduce the problem of fretting corrosion between contacting teeth in a rather simple and accurate manner. It is an object of the present disclosure to at least partially fulfil this need.

### SUMMARY

In a first aspect a pitch drive system for rotating a wind turbine blade with respect to a wind turbine rotor hub is provided. The blade or hub has an annular gear or annular gear segment. The pitch drive system comprises a motor, a drive pinion operationally connected with the motor and a lubrication pinion. The lubrication pinion is arranged to mesh simultaneously with the drive pinion and with the annular gear. And the lubrication pinion comprises a substantially radial channel adapted to provide a lubricant to a tooth of the lubrication pinion that is in meshing engagement with teeth of the annular gear at least in a predefined blade position for wind speeds at or below nominal wind speed.

According to this aspect, the lubrication pinion arranged to mesh at the same time with the drive pinion and with the annular gear is interposed between the drive pinion and the annular gear (or annular gear segment). Furthermore, the teeth of the lubrication pinion that are meshing with teeth of the annular gear receive a lubricant while they are meshing, i.e. when their flanks can be touching each other due to the varying torque produced by the weight and the torsional forces of e.g. the rotor blade. Furthermore such a lubricant is received at least in a predefined blade position for wind speeds at or below nominal wind speed, i.e. the prevailing pitch position. The lubricant is thus received when and where it is (most) needed. The engagement is provided with a lubricant and fretting corrosion and premature wear of the teeth of the annular gear (or annular gear segment) can thus be reduced or at least delayed. This way, the life of the annular gear may be extended. Furthermore, the provision of a lubrication pinion does not interfere with the normal operation of the pitch system, e.g. it allows complete rotation of a blade without interference.

In some examples, the lubrication pinion may further comprise a substantially radial channel adapted to provide a lubricant to another tooth of the lubrication pinion that is in meshing engagement with teeth of the drive pinion. These teeth also receive a lubricant while they are meshing, i.e. lubricant is also received when it is (most) needed, e.g. for wind speeds at or below nominal wind speed, i.e. when the blade needs to be kept in standstill position. The engagement drive pinion-lubrication pinion is also provided with a lubricant and fretting corrosion and premature wear of the teeth of the drive pinion can also be reduced or at least delayed. The life of the drive pinion and the annular gear may be extended at the same time.

In some examples, one or more substantially radial channels may be adapted to provide lubricant to at least one flank of the lubrication pinion teeth. This ensures the provision of lubricant at the area of the tooth that is needed (the contact area) or what is the same where it is needed.

In some examples, the lubrication pinion may be made from a softer material than that of the drive pinion and/or the annular gear. This means that the lubrication pinion can be made of a relatively cheap material and that the lubrication pinion (softer material) can absorb the torque loads up to a threshold value after which it may break. In these cases it can be replaced by a new substantially cheap lubrication pinion. Furthermore replacing the lubrication pinion is a rather simple operation as no disconnection from the motor and gearbox is required but only unscrewing of the bolts fixing the lubrication pinion to e.g. a mounting flange provided in a wind turbine hub. The lubrication pinion made of softer material is thus used as a component to be sacrificed in favour of the annular gear.

In another aspect, a wind turbine rotor is provided comprising one or more pitch drive systems substantially as hereinbefore described.

In some examples, the drive pinion and the lubrication pinion may be mounted on a flange of the hub. In some of these examples, the flange may comprise two orifices adapted to receive the lubrication pinion such that the lubrication pinion meshes simultaneously with the drive pinion and with the annular gear. The two orifices can define two different potential positions for the lubrication pinion in which it meshes at the same time with the annular gear and the drive pinion. If the teeth of the annular gear or the teeth of the drive pinion contacting the lubrication pinion get damaged (for example when the blade is in a pitch position for nominal or below wind speeds), a simple operation of moving the lubrication pinion from a first position in which it meshes simultaneously with a first annular gear section and a first drive pinion section to a second position in which it meshes with a second annular gear section and a second drive pinion section results (for a given blade position) in different teeth of the lubrication pinion contacting different teeth of the annular gear and different teeth of the drive pinion. This way, in the pitch position for wind speeds at or below nominal wind speed, other teeth of the annular gear and other teeth of the drive pinion are in contact with the lubrication pinion, i.e. the lubrication pinion can be interposed between the annular gear and the drive pinion at two different positions. The life of the annular gear and of the drive pinion may thus be extended with a relatively simple operation.

Further, the robustness and stiffness of the flange may not be substantially affected by the presence of the free orifice. And, above-mentioned construction does not hinder or negatively influence the normal operation of the pitch system.

In some of these examples, a further lubrication pinion may be provided. The further lubrication pinion may also mesh simultaneously with the drive pinion and with the annular gear. And the further lubrication pinion may further comprise a substantially radial channel adapted to provide a lubricant to a tooth of the lubrication pinion that is in meshing engagement with teeth of the annular gear at least in a predefined blade position for wind speeds at or below nominal wind speed. In these examples, in addition to the effects described in connection with the provision of a single lubrication pinion, the varying torque causing teeth wear is spread in two different paths involving different sections of the annular gear and of the drive pinion. This way, the induced torque in the teeth of the drive pinion and the annular gear is at least partially decreased and the life of the drive pinion and of the annular gear may thus be extended.

In a still further aspect, a wind turbine is provided comprising a wind turbine rotor substantially as hereinbefore described.

### BRIEF DESCRIPTION OF THE DRAWINGS

Non-limiting examples of the present disclosure will be described in the following with reference to the appended drawings, in which:
Figure 1 shows a perspective view of a partial pitch drive system for a wind turbine rotor according to an example;
Figure 2 shows a cross-sectional view of a lubrication pinion according to an example;
Figure 3 shows a top view of a partial pitch drive system for a wind turbine rotor according to another example;
Figure 4 shows a cross-sectional view of figure 3 along line A-A;
Figure 5 shows a perspective view of a partial pitch drive system according to a still further example.

### DETAILED DESCRIPTION OF EXAMPLES

All through the figures the same reference signs will be used to denote the same or very similar elements.

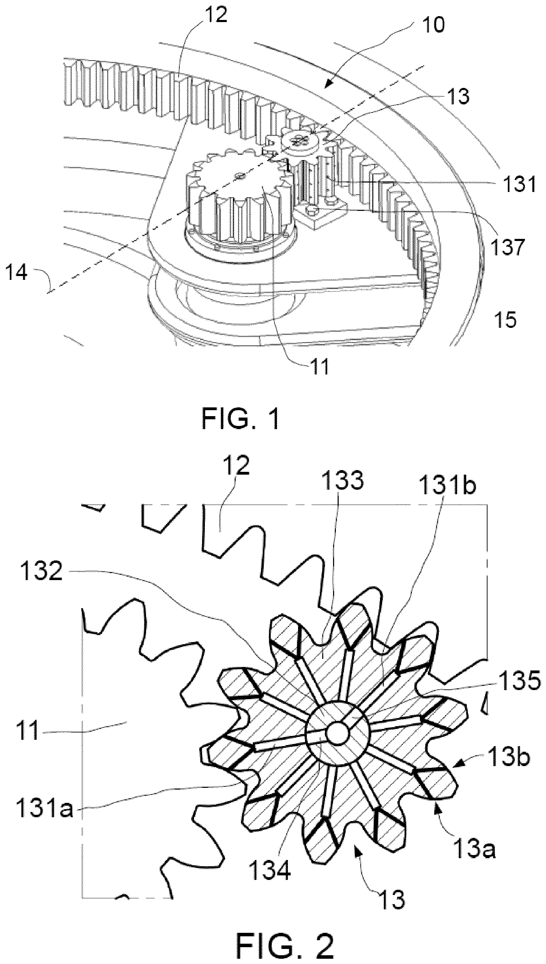

Figure 1 shows part of a pitch drive system for rotating a wind turbine blade with respect to a wind turbine rotor hub according to an example. A wind turbine rotor may comprise a hub, a plurality of blades (not shown) and one or more pitch drive systems. The pitch drive systems may comprise a pitch bearing 10, a motor (not shown), a drive pinion 11 operationally connected with the motor, an annular gear 12 and a lubrication pinion 13 arranged between the drive pinion 11 and the annular gear 12 so as to mesh with both, the drive pinion 11 and the annular gear 12 at the same time.

The gear may typically be an annular gear or an annular gear segment. The gear can be fixed to e.g. a bearing ring connected to a portion of a wind turbine blade or a portion of the wind turbine hub. And the drive pinion (and the lubrication pinion) may be mounted on the other of the blade or the hub such that the blade can be rotated with respect to the hub.

The pitch drive system may further comprise a gearbox (not shown) comprising a reduction gearing (sometimes referred to as a "reductor" or a "reducer") arranged between the motor and the drive pinion 11. In this example, part of the pitch drive system such as the gearbox or the motor may be supported by a flange 15 of the hub. In some examples, the flange may form an integral piece with the hub. In others it may be a separate piece fixed to the hub by welding or by fastening means such as screws, bolts or similar. In the example of figure 1, the lubrication pinion 13 may be rotatably mounted on the flange 15 and may be fastened to it with bolts 137.

In the example of figure 1, the lubrication pinion 13 may comprise three substantially radial channels 131 adapted to provide a lubricant to each tooth of the lubrication pinion 13. The three radial channels 131 adapted to provide a lubricant to the same tooth may be provided at different axial heights of the lubrication pinion tooth. This enhances proper lubricant distribution along an axial height of the tooth. In alternative examples other number of channels may be provided in a single tooth. In further examples, not all the lubrication pinion teeth may be provided with channels, as long as the lubrication pinion tooth that is in meshing engagement with teeth of the annular gear at least in a predefined blade position for wind speeds at or below nominal wind speed comprises at least one channel.

Figure 2 shows a cross-sectional view of a lubrication pinion 13 according to an example. In this example, the lubrication pinion 13 may comprise a radial channel 131 ending in a substantially Y-shaped configuration in each one of its teeth. With this configuration both flanks 13a, 13b of each lubrication pinion tooth receive lubricant. Other ways of achieving lubrication at each flank of a tooth may also be foreseen e.g. with channels ending in a T-shaped configuration. In further examples, straight channels lubricating e.g. the teeth top land or the bottom land may also be foreseen. In yet further examples, channels ending in an L-shaped configuration so as to be able to provide lubricant to a single flank of the teeth may also be foreseen. And in further alternatives, not all the teeth of the lubrication pinion may comprise a channel substantially as hereinbefore described as long as the lubrication pinion tooth that is in meshing engagement with teeth of the annular gear at least in a predefined blade position for wind speeds at or below nominal wind speed comprises at least one channel.

Figure 2 also shows that in some examples, the lubrication pinion 13 may comprise a central portion 132 and an outer portion 133. The outer portion 133 may be rotatably mounted about the central portion 132. In these cases, the channels 131 may be provided in the outer portion 133. The example of figure 2 further shows that the central portion 132 may comprise two substantially radial passages 134, 135; passage 134 that may be adapted to be in fluid communication with channel 131a that is in meshing engagement with teeth of the drive pinion 11 and passage 135 that may be adapted to be in fluid communication with channel 131b that is in meshing engagement with teeth of the gear 12 (at least in a predefined blade position for wind speeds at or below nominal wind speed). In alternative examples, more passages may be provided or even a single one, as long as it is adapted to be in fluid communication with the channel that is in meshing engagement with teeth of the annular gear at least in a predefined blade position for wind speeds at or below nominal wind speed.

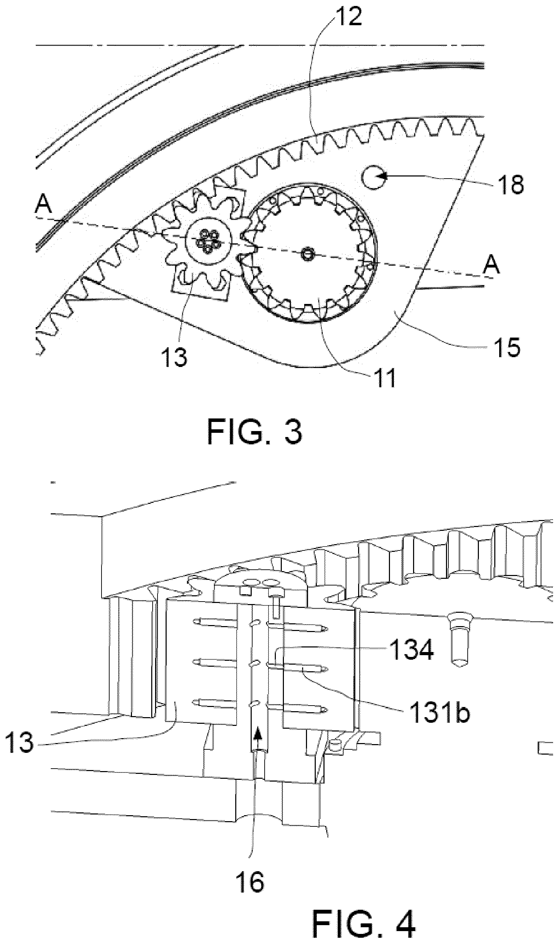

Figure 3 shows a top view of a partial pitch drive system for a wind turbine according to another example. The example of figure 3 differs from that of figure 1 in that the lubrication pinion 13 may not be mounted in an axis 14 (see figure 1) in which the distance between the gear 12 and the drive pinion 11 is the shortest, but it may be displaced from said axis 14 while still meshing with the gear 12 and with the drive pinion 11. According to this example, the flange 15 may be provided with a further orifice 18 adapted to receive a lubrication pinion such that the lubrication pinion meshes with the drive pinion and with the gear.

Figure 4 shows a partial cross-sectional view of figure 3 along line A-A. In the example of figure 4, the lubrication pinion 13 may also comprise three substantially radial channels 131 provided at different axial heights of the lubrication pinion tooth adapted to provide a lubricant to a tooth of the lubrication pinion 13. This enhances proper lubricant distribution along the tooth.

Furthermore, figure 4 shows a central lubricant supply 16 that may have a tubular configuration adapted to be in fluid communication with the passages 134 provided in the central portion 132 of the lubrication pinion 13. It should be understood that in those cases in which more than one passage is provided the lubricant supply 16 would be adapted to provide fluid communication to all the passages. Depending on circumstances, a valve and a control system may further be provided for regulating the provision of lubricant to the different passages. The central lubricant supply may also be used in examples in which the lubrication pinion is made as a single piece. In these cases the lubricant supply would be adapted to provide fluid communication to the channels and a valve may regulate to which channel the lubricant is to be supplied i.e. to the channel provided in the tooth that is in meshing engagement with teeth of the annular gear at least in a predefined blade position for wind speeds at or below nominal wind speed.

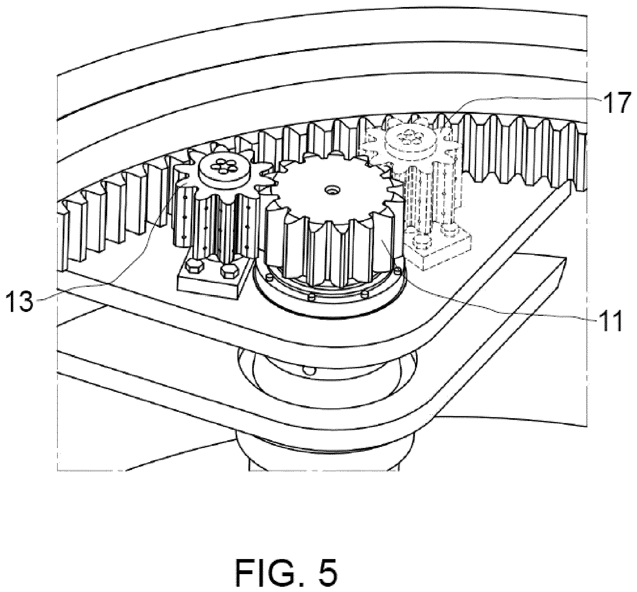

Figure 5 shows a perspective view of a partial pitch drive system according to a still further example. The example of figure 5 differs from that of figures 2 and 3 in that a further lubrication pinion 17 may be provided (in dashed lines). The further lubrication pinion 17 may be similar to or the same as hereinbefore described lubrication pinions. Both lubrication pinions 13 and 17 may be the same or may be different in e.g. the number of channels they have, the material from which they are made, the distribution of the channels, the shape of the channels, etc.

Alternatively, the example of figure 5 may depict in dashed lines a second suitable position for mounting the lubrication pinion 13 of figures 2 and 3, in the orifice 18 adapted to receive a lubrication pinion such that the lubrication pinion meshes in the same position with a different section of the drive pinion and with a different section of the annular gear.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A pitch drive system for rotating a wind turbine blade with respect to a wind turbine rotor hub, the blade or hub having an annular gear (12) or annular gear segment, the pitch drive system comprising a motor, a drive pinion (11) operationally connected with the motor, and a lubrication pinion (13) wherein the lubrication pinion (13) is arranged to mesh simultaneously with the drive pinion (11) and with the annular gear (12) or the annular gear segment, and the lubrication pinion (13) comprises a substantially radial channel (131), the channel (131; 131a; 131b) being adapted to provide a lubricant to a tooth of the lubrication pinion (13) that is in meshing engagement with teeth of the annular gear (12) at least in a predefined blade position for wind speeds at or below nominal wind speed.

2. The pitch drive system of claim 1, wherein the lubrication pinion (13) further comprises a substantially radial channel adapted to provide a lubricant to another tooth of the lubrication pinion (13) that is in meshing engagement with teeth of the drive pinion (11).

3. The pitch drive system of any of claims 1 or 2, wherein the lubrication pinion (13) comprises a central portion (132) and an outer portion (133) rotatably mounted about the central portion (132), wherein the central portion (132) comprises a substantially radial passage (134; 135) designed to be in fluid communication with the channel (131; 131a; 131b) adapted to provide a lubricant to the tooth of the lubrication pinion (13) that is in meshing engagement with one selected from the annular gear (12) or the drive pinion (11).

4. The pitch drive system of claim 3, wherein the outer portion (133) of the lubrication pinion comprises the substantially radial channels (131; 131a; 131b).

5. The pitch drive system of any of claims 3 or 4, wherein the central portion (132) comprises two or more substantially radial passages (134; 135) designed such that one passage (134) is adapted to be in fluid communication with the channel (131a) adapted to provide a lubricant to the tooth of the lubrication pinion (13) that is in meshing engagement with the annular gear (12) and another passage (135) is adapted to be in fluid communication with the channel (131b) adapted to provide a lubricant to the tooth of the lubrication pinion (13) that is in meshing engagement with teeth of the drive pinion (11).

6. The pitch drive system of any of claims 1-5, wherein each lubrication pinion tooth comprises a substantially radial channel (131).

7. The pitch drive system of any of claims 1-6, wherein one or more substantially radial channels (131; 131a; 131b) are adapted to provide lubricant to at least one flank (13a; 13b) of the lubrication pinion teeth (13).

8. The pitch drive system of claim 7, wherein one or more channels (131; 131a; 131b) end in a substantially Y-shaped configuration such that a lubricant flowing through a channel (131; 131a; 131b) reaches both flanks of the lubrication pinion teeth.

9. The pitch drive system of claim 7, wherein one or more channels (131; 131a; 131b) end in a substantially T-shaped configuration such that a lubricant flowing through a channel (131; 131a; 131b) reaches both flanks of the lubrication pinion teeth.

10. The pitch drive system of any of claims 1-9, further comprising substantially radial channels (131; 131a; 131b) provided at different axial heights of the lubrication pinion.

11. The pitch drive system of any of claims 1-10, further comprising a central lubricant supply (16) adapted to be in fluid communication with the radial channels (131; 131a; 131b).

12. The pitch drive system of any of claims 1-11, wherein the lubrication pinion (13) is made from a softer material than that of the drive pinion (11) and/or the annular gear (12).

13. A wind turbine rotor comprising a hub, a plurality of blades, and one or more pitch drive systems according to any of claims 1-12, wherein the drive pinion and the lubrication pinion (13) are mounted on a flange (15) of the hub, wherein the flange (15) comprises two orifices adapted to receive the lubrication pinion (13) such that the lubrication pinion (13) meshes simultaneously with the drive pinion (11) and with the annular gear (12).

14. The wind turbine rotor of claim 13, further comprising a further lubrication pinion (17), the further lubrication pinion (17) also meshing simultaneously with the drive pinion (11) and with the annular gear (12), wherein the further lubrication pinion (17) comprises a substantially radial channel, the channel being adapted to provide a lubricant to a tooth of the lubrication pinion that is in meshing engagement with teeth of the annular gear (12) at least in a predefined blade position for wind speeds at or below nominal wind speed.

15. A wind turbine comprising a wind turbine rotor according to any of claims 13-14.

## Patentansprüche

1. Ein Blattverstellantriebssystem zur Drehung eines Windturbinenblatts bezüglich einer Windturbinenrotornabe, wobei das Blatt oder die Nabe einen Zahnring (12) oder einen Zahnringabschnitt hat, wobei das Blattverstellantriebssystem einen Motor, ein mit dem Motor operativ verbundenes Antriebsritzel (11), und ein Schmierritzel (13) umfasst, wobei das Schmierritzel (13) angeordnet ist, um gleichzeitig in das Antriebsritzel (11) und in den Zahnring (12) bzw. den Zahnringabschnitt einzugreifen, und
das Schmierritzel (13) einen im Wesentlichen radialen Kanal (131) umfasst, wobei der Kanal (131; 131a; 131b) angepasst ist, um einen Zahn des Schmierritzels (13), der in einrückendem Eingriff mit Zähnen des Zahnrings (12) ist mindestens in einer vordefinierten Blattposition für Windgeschwindigkeiten entsprechend oder unterhalb der Nennwindgeschwindigkeit mit einem Schmiermittel zu versorgen.

2. Das Blattverstellantriebssystem des Anspruchs 1, wobei das Schmierritzel (13) weiterhin einen im Wesentlichen radialen Kanal umfasst, der angepasst ist, um einen anderen Zahn des Schmierritzels (13), der in einrückendem Eingriff mit Zähnen des Antriebsritzels (11) ist mit Schmiermittel zu versorgen.

3. Das Blattverstellantriebssystem von einem der Ansprüche 1 oder 2, wobei das Schmierritzel (13) einen mittleren Teil (132) und einen um den mittleren Teil (132) drehbar montierten äußeren Teil (133) umfasst, wobei der mittlere Teil (132) einen im Wesentlichen radialen Durchgang (134; 135) umfasst, der ausgelegt ist, um in Fluidverbindung mit dem Kanal (131; 131a; 131b) zu stehen, der angepasst ist, um den Zahn des Schmierritzels (13), der in einrückendem Eingriff mit einem ausgewählt aus dem Zahnring (12) oder dem Antriebsritzel (11) ist mit einem Schmiermittel zu versorgen.

4. Der Blattverstellantriebssystem des Anspruchs 3, wobei der äußere Teil (133) des Schmierritzels die im Wesentlichen radialen Kanäle (131; 131a; 131b) umfasst.

5. Das Blattverstellantriebssystem von einem der Ansprüche 3 oder 4, wobei der mittlere Teil (132) zwei oder mehr im Wesentlichen radiale Durchgänge (134; 135) umfasst, die derart ausgelegt sind, dass ein Durchgang (134) angepasst ist, um in Fluidverbindung mit dem Kanal (131a) zu stehen, der angepasst ist, um den Zahn des Schmierritzels (13), der in einrückendem Eingriff mit dem Zahnring (12) ist mit Schmiermittel zu versorgen und ein weiterer Durchgang (135) angepasst ist, um in Fluidverbindung mit dem Kanal (131b) zu stehen, der angepasst ist, um den Zahn des Schmierritzels (13), der in einrückendem Eingriff mit Zähnen des Antriebsritzels (11) ist, mit einem Schmiermittel zu versorgen.

6. Das Blattverstellantriebssystem von einem der Ansprüche 1-5, wobei jeder Zahn des Schmierritzels einen im Wesentlichen radialen Kanal (131) umfasst.

7. Das Blattverstellantriebssystem von einem der Ansprüche 1-6, wobei einer oder mehrere im Wesentlichen radiale Kanäle (131; 131a; 131b) angepasst sind, um mindestens eine Flanke (13a; 13b) der Zähne des Schmierritzels (13) mit Schmiermittel zu versorgen.

8. Das Blattverstellantriebssystem des Anspruchs 7, wobei einer oder mehrere Kanäle (131; 131a; 131b) in einer im Wesentlichen Y-förmigen Konfiguration enden, so dass ein durch einen Kanal (131; 131a; 131b) fließendes Schmiermittel beide Flanken der Zähne des Schmierritzels erreicht.

9. Das Blattverstellantriebssystem des Anspruchs 7, wobei einer oder mehrere Kanäle (131; 131a; 131b) in einer im Wesentlichen T-förmigen Konfiguration enden, so dass ein durch einen Kanal (131; 131a; 131b) fließendes Schmiermittel beide Flanken der Zähne des Schmierritzels erreicht.

10. Das Blattverstellantriebssystem von einem der Ansprüche 1-9, weiterhin umfassend auf verschiedenen axialen Höhen des Schmierritzels bereitgestellte im Wesentlichen radiale Kanäle (131; 131a; 131b).

11. Das Blattverstellantriebssystem von einem der Ansprüche 1-10, weiterhin umfassend eine zentrale Schmiermittelversorgung (16), die angepasst ist, um in Fluidverbindung mit den radialen Kanälen (131; 131a; 131b) zu stehen.

12. Das Blattverstellantriebssystem von einem der Ansprüche 1-11, wobei das Schmierritzel (13) aus einem weicheren Material als das des Antriebsritzels (11) und/oder des Zahnrings (12) besteht.

13. Ein Windturbinenrotor umfassend eine Nabe, eine Vielzahl von Blättern, und ein oder mehrere Blattverstellantriebssysteme nach einem der Ansprüche 1-12, wobei das Antriebsritzel und das Schmierritzel (13) auf einem Flansch (15) der Nabe montiert sind, wobei der Flansch (15) zwei Öffnungen umfasst, die angepasst sind, um das Schmierritzel (13) zu empfangen, so dass das Schmierritzel (13) gleichzeitig in das Antriebsritzel (11) und in den Zahnring (12) eingreift.

14. Der Windturbinenrotor des Anspruchs 13, weiterhin umfassend ein weiteres Schmierritzel (17), wobei das weitere Schmierritzel (17) auch gleichzeitig in das Antriebsritzel (11) und in den Zahnring (12) eingreift, wobei das weitere Schmierritzel (17) einen im Wesentlichen radialen Kanal umfasst, wobei der Kanal angepasst ist, um einen Zahn des Schmierritzels, der in einrückendem Eingriff mit Zähnen des Zahnrings (12) ist mindestens in einer vordefinierten Blattposition für Windgeschwindigkeiten entsprechend oder unterhalb der Nennwindgeschwindigkeit mit Schmiermittel zu versorgen.

15. Eine Windturbine umfassend einen Windturbinenrotor nach einem der Ansprüche 13-14.

## Revendications

1. Un système d'entraînement de pas de pale pour faire pivoter une pale d'éolienne par rapport à un moyeu de rotor d'éolienne, la pale ou le moyeu ayant une couronne dentée (12) ou un segment de couronne dentée, le système d'entraînement de pas de pale comprenant un moteur, un pignon d'entraînement (11) relié de façon opérationnelle au moteur, et un pignon de lubrification (13) dans lequel le pignon de lubrification (13) est disposé pour intervenir de façon simultanée dans le pignon d'entraînement (11) et dans la couronne dentée (12) ou le segment de couronne dentée, et
le pignon de lubrification (13) comprend un canal essentiellement radial (131), le canal (131; 131a; 131b) étant adapté pour fournir du lubrifiant à une dent du pignon de lubrification (13) qui est en contact d'engrènement avec des dents de la couronne dentée (12) au moins dans une position de pale prédéfinie pour des vitesses du vent correspondantes à ou au-dessous de la vitesse nominale du vent.

2. Le système d'entraînement de pas de pale de la revendication 1, dans lequel le pignon de lubrification (13) comprend en outre un canal essentiellement radial adapté pour fournir un lubrifiant à une autre dent du pignon de lubrification (13) qui est en contact d'engrènement avec des dents du pignon d'entraînement (11).

3. Le système d'entraînement de pas de pale de l'une quelconque des revendications 1 ou 2, dans lequel le pignon de lubrification (13) comprend une partie centrale (132) et une partie extérieure (133) montée à rotation autour de la partie centrale (132), dans lequel la partie centrale (132) comprend un passage essentiellement radial (134; 135) conçu pour être en communication fluidique avec le canal (131; 131a; 131b) adapté pour fournir un lubrifiant à la dent du pignon de lubrification (13) qui est en contact d'engrènement avec un choisi parmi la couronne dentée (12) ou le pignon d'entraînement (11).

4. Le système d'entraînement de pas de pale de la revendication 3, dans lequel la partie extérieure (133) du pignon de lubrification comprend les canaux essentiellement radiaux (131; 131a; 131b).

5. Le système d'entraînement de pas de pale de l'une quelconque des revendications 3 ou 4, dans lequel la partie centrale (132) comprend deux ou plusieurs passages essentiellement radiaux (134; 135) dessinés de façon qu'un passage (134) est adapté pour être en communication fluidique avec le canal (131a) adapté pour fournir un lubrifiant à la dent du pignon de lubrification (13) qui est en contact d'engrènement avec la couronne dentée (12) et un autre passage (135) est adapté pour être en communication fluidique avec le canal (131b) adapté pour fournir un lubrifiant à la dent du pignon de lubrification (13) qui est en contact d'engrènement avec des dents du pignon d'entraînement (11).

6. Le système d'entraînement de pas de pale de l'une quelconque des revendications 1-5, dans lequel chaque dent du pignon de lubrification comprend un canal essentiellement radial (131).

7. Le système d'entraînement de pas de pale de l'une quelconque des revendications 1-6, dans lequel un ou plusieurs canaux essentiellement radiaux (131; 131a; 131b) sont adaptés pour fournir du lubrifiant à au moins un flanc (13a; 13b) des dents du pignon de lubrification (13).

8. Le système d'entraînement de pas de pale de la revendication 7, dans lequel un ou plusieurs canaux (131; 131a; 131b) aboutissent à une configuration essentiellement en forme de Y de façon qu'un lubrifiant s'écoulant à travers un canal (131; 131a; 131b) atteint tous deux flancs des dents du pignon de lubrification.

9. Le système d'entraînement de pas de pale de la revendication 7, dans lequel un ou plusieurs canaux (131; 131a; 131b) aboutissent à une configuration essentiellement en forme de T de façon qu'un lubrifiant s'écoulant à travers un canal (131; 131a; 131b) atteint tous deux flancs des dents du pignon de lubrification.

10. Le système d'entraînement de pas de pale de l'une quelconque des revendications 1-9, comprenant en outre des canaux essentiellement radiaux (131; 131a; 131b) situés à des hauteurs axiales différentes du pignon de lubrification.

11. Le système d'entraînement de pas de pale de l'une quelconque des revendications 1-10, comprenant en outre une alimentation centrale en lubrifiant (16) adaptée pour être en communication fluidique avec les canaux radiaux (131; 131a; 131b).

12. Le système d'entraînement de pas de pale de l'une quelconque des revendications 1-11, dans lequel le pignon de lubrification (13) est réalisé en un matériau plus souple que celui du pignon d'entraînement (11) et/ou de la couronne dentée (12).

13. Un rotor d'éolienne comprenant un moyeu, une pluralité de pales, et un ou plusieurs systèmes d'entraînement de pas de pale selon l'une quelconque des revendications 1-12, dans lequel le pignon d'entraînement et le pignon de lubrification (13) sont montés sur un flasque (15) du moyeu, dans lequel le flasque (15) comprend deux orifices adaptés pour recevoir le pignon de lubrification (13) de façon que le pignon de lubrification (13) intervient simultanément dans le pignon d'entraînement (11) et dans la couronne dentée (12).

14. Le rotor d'éolienne de la revendication 13, comprenant en outre un autre pignon de lubrification (17), l'autre pignon de lubrification (17) intervenant aussi simultanément dans le pignon d'entraînement (11) et dans la couronne dentée (12), dans lequel l'autre pignon de lubrification (17) comprend un canal essentiellement radial, le canal étant adapté pour fournir un lubrifiant à une dent du pignon de lubrification qui est en contact d'engrènement avec des dents de la couronne dentée (12) au moins dans une position de pale prédéfinie pour des vitesses du vent correspondantes à ou au-dessous de la vitesse nominale du vent.

15. Une éolienne comprenant un rotor d'éolienne selon l'une quelconque des revendications 13-14.
